Europäisches Patentamt

European Patent Office

Office européen des brevets

(11) Publication number: **0 229 483**
**A1**

## (12) EUROPEAN PATENT APPLICATION

(21) Application number: **86309398.5**

(22) Date of filing: **03.12.86**

(51) Int. Cl.4: **A01B 59/043** , **A01B 59/06**

(30) Priority: **13.12.85 GB 8530778**

(43) Date of publication of application:
**22.07.87 Bulletin 87/30**

(84) Designated Contracting States:
**DE ES FR GB**

(71) Applicant: **Metallifacture Limited**
**Mansfield Road**
**Redhill Nottingham NG5 8PY(GB)**

(72) Inventor: **Walters,John Edward**
**292 St Albans Road**
**Bulwell,Nottingham(GB)**

(74) Representative: **MacGregor, Gordon et al**
**ERIC POTTER & CLARKSON 14 Oxford Street**
**Nottingham, NG1 5BP(GB)**

(54) **Top link of a tractor linkage.**

(57) A top-link for an agricultural tractor linkage, the link comprising a connector (20) of sleeve form engaged with an end portion (15) of the link by means of a ball joint (17, 22); the ball joint comprising part-spherical concave surfaces (17) of the end portion and complementary convex surfaces (22) on the connector, characterised in that the connector comprises a cylindrical sleeve (21) of substantially constant cross-section and a collar (23) tightly received about the sleeve, the collar being provided with the convex surfaces (22) and being composed of plastics material.

The plastics member is filled polyamide such as glass-filled nylon and is moulded onto the sleeve - (20).

Fig.1

## TOP-LINK FOR A TRACTOR LINKAGE

This invention relates to a top-link for a tractor linkage.

Agricultural tractors are provided with a three point linkage for attachment to implements. Such a linkage has a pair of lower hydraulically extensible and retractable links and a top link which is mechanically adjustable in length. This mechanical adjustment is provided by means of a collar screw-engaged with a pair of separate link end-portions having threads of opposite hand. Each link end-portion terminates in a bearing case which captivates a connector having part-spherical bearing surfaces defining a ball-joint with the bearing case. Each connector is a sleeve which receives a link pin for attachment to an implement at one end of the top link and for attachment to the tractor at the opposite end of the top link. A top link of this form is disclosed in FR-A-1148609, on which the precharacterising clause of Claim 1 is based.

The connector, comprising the sleeve with the spherical bearing surfaces, is made in one piece either as a metal forging or by machining the connector from a solid slug of metal. In both cases, the connector is expensive to produce.

The present invention provides an improved top-link in which the connector is cheaper to produce and has improved bearing properties.

The present invention provides a top-link for an agricultural tractor linkage, the link comprising a connector of sleeve form engaged with an end portion of the link by means of a ball joint; the ball joint comprising part-spherical concave surfaces of the end portion and complementary convex surfaces on the connector, characterised in that the connector comprises a cylindrical sleeve of substantially constant cross-section and a collar tightly received about the sleeve, the collar being provided with the convex surfaces and being composed of plastics material.

The plastics portion is preferably moulded onto the sleeve. The plastics material may be, for example, a filled polyamide. In one example, the material is glass-filled nylon.

Spherical bearings of a different construction from those usually provided in the agricultural tractor art are provided in unrelated arts. GB-A-1485019 (FR-A-2258552), for example, discloses a spherical bearing for use in the aircraft industry. The bearing disclosed in that document is designed to be disassembled for maintenance. Bearings of this type are not required in agricultural tractors, where sturdiness and cheapness of construction are the prime considerations and no manufacturer of agricultural tractors would look to the aircraft industry for an answer to his problems.

The bearing of GB-A-1485019 comprises a spool on which segments of a convex collar are loosely mounted and located axially of the spool by flanges. The segments can be individually removed from the spool without totally dismantling the bearing. There is no disclosure of tight fitting of a convex collar on a sleeve, nor of constructing the collar from plastics material.

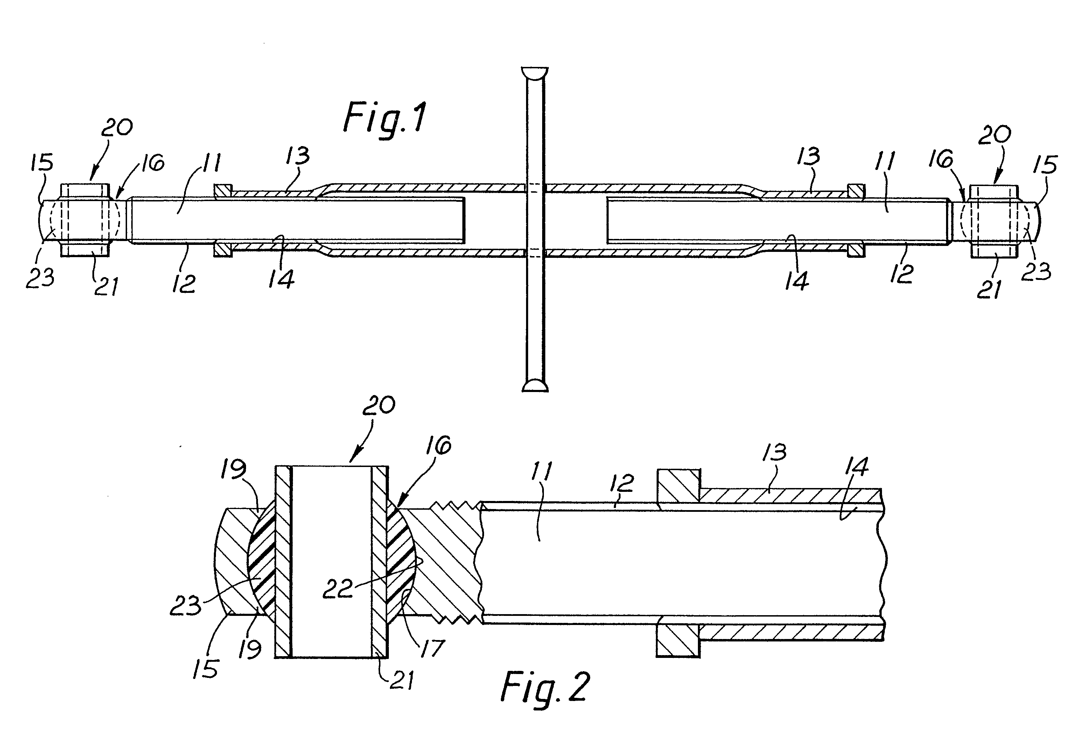

Reference is now made to the accompanying drawing, wherein the sole Figure is a sectional view of a part of a top-link for a three-point linkage of an agricultural tractor.

The top-link comprises a pair of main link elements 11. Each link element has an externally screw-threaded portion 12, the threads of the two link elements being of opposite hand. A collar 13 has internal screw threads, such as 14, corresponding to and engaged with the screw-threaded portions of the two link elements. The collar can be rotated to adjust the length of the top-link.

Each link element 11 has an end portion 15 having an aperture 16 therethrough the defining surfaces of which form concave surfaces 17. A connector 20 comprises a constant cross-section sleeve 21 carrying a portion with external convex surfaces 22 complementary to the concave surfaces 17. The sleeve 21 passes through the aperture 16 with the complementary surfaces engaged to define a ball joint. The marginal portions 19 of the end portion 15 around the aperture are swaged to captivate the connector. In use, the sleeve of each connector receives a pin for securing the top-link to the tractor at one end and to an implement at the opposite end.

The convex surfaces 22 are defined by a spherical plastics member 23 tightly fitted around the periphery of the sleeve. For ease of manufacture and to ensure a tight fit, the plastics member is injection moulded onto the sleeve, which is made of steel. This permits exceptionally cheap manufacture and provides an improved ball joint in which friction is reduced relative to existing connectors made entirely of metal.

## Claims

1. A top link for an agricultural tractor linkage, the link comprising a connector (20) of sleeve form engaged with an end portion (15) of the link by means of a ball joint (17, 22); the ball joint comprising part-spherical concave surfaces (17) of the end portion and complementary convex surfaces (22) on the connector, characterised in that the connector comprises a cylindrical sleeve (21) of substantially constant cross-section and a collar (23) tightly received about the sleeve, the collar being provided with the convex surfaces (22) and being composed of plastics material.

2. A top link according to Claim 1, wherein the plastics member (23) is moulded onto the sleeve - (20).

3. A top link according to Claim 1 or 2, wherein the plastics member (23) is made of a filled polyamide.

4. A top link according to Claim 3 wherein the plastics member is made of glass-filled nylon.

5. A top link including a pair of elongate elements (11) having screw-threaded portions (12) of opposite hand and a nut (13) having internal screw threads (14) and engaged with both elements, each of the opposite end portions 15 of the link being engaged with a corresponding connector (20) by means of a corresponding ball joint (17, 20) as defined in any one of the preceding claims.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 148 609 (VALIN) <br> * Whole document * <br> --- | 1,5 | A 01 B 59/043 <br> A 01 B 59/06 |
| Y | GB-A-2 155 539 (DUNLOP LTD) <br> * Whole document * | 1,5 | |
| A | --- | 2,3,4 | |
| A | US-A-4 053 190 (McCLOSKEY) <br> * Whole document * <br> --- | 1,3,4 | |
| A | FR-A-1 574 101 (ULDERUP) <br> --- | | |
| A | US-A-3 591 669 (MEMBRY) <br> --- | | TECHNICAL FIELDS SEARCHED (Int. Cl.4) |
| A | US-A-3 769 672 (EKLUND) <br> ----- | | A 01 B <br> F 16 C |

The present search report has been drawn up for all claims

| Place of search | Date of completion of the search | Examiner |
|---|---|---|
| THE HAGUE | 19-03-1987 | VON ARX V.U. |